# EUROPÄISCHE PATENTANMELDUNG

(11) **EP 0 887 165 A2**
(43) Veröffentlichungstag der Anmeldung: **30.12.1998**
(21) Anmeldenummer: 98110535.6
(22) Anmeldetag: 09.06.1998
(51) Int. Cl.: B29B 13/02, B29C 57/12

(54) **Heizvorrichtung**

(30) Priorität: 27.06.1997 DE 29711193 U
(71) Anmelder: BELLAFORM EXTRUSIONSTECHNIK GMBH, 55218 Ingelheim (DE)
(72) Erfinder: Merz, Ulrich, 55239 Gau-Odernheim (DE)
(74) Vertreter: Fuchs Mehler Weiss & Fritzsche

(57) **Zusammenfassung**

Es wird eine Heizvorrichtung beschrieben, die einen problemlosen Zugang zu den zu erwärmenden Gegenständen im Bedarfsfall gewährleistet, ohne daß Wärmeverluste auftreten. Die Heizvorrichtung, die in Verbindung mit Lippenrollvorrichtungen eingesetzt wird, weist mindestens zwei beweglich angeordnete Heizkästen (1) und (2) auf, die über ein Parallelogrammgestänge mit einem ortsfesten Trägerelement (13) derart schwenkbar verbunden sind, daß sie sich in Ruhestellung beabstandet zum zu erwärmenden Gegenstand ebenfalls in Schließstellung befinden.

## Beschreibung

Die Erfindung betrifft eine Heizvorrichtung mit mindestens zwei beweglich angeordneten Heizkästen, die mindestens einen zu erwärmenden Gegenstand in Arbeitsstellung weitgehend umschließen (Schließstellung) und die in einer Ruhestellung bewegbar sind, in der der Gegenstand zugänglich ist.

Derartige Heizvorrichtungen werden beispielsweise in Verbindung mit Lippenrollvorrichtungen eingesetzt, in denen gestanzte, tiefgezogene Kunststoffbecher mit einem Rollrand versehen werden. Um die Kunststoffbecher auf eine bestimmte vorgegebene Temperatur vorzuwärmen, müssen die Becher eine Heizstrecke durchlaufen, in der sie allseitig gleichzeitig erwärmt werden. Dementsprechend muß die Heizvorrichtung so gestaltet sein, daß sie die Becher umschließt. Andererseits müssen die Becher aber auch zugänglich sein, wenn beim Transport der Becher durch die Heizvorrichtung Probleme auftreten sollten und die Becher von Hand aus der Heizvorrichtung entfernt werden müssen. Hierzu bieten sich mehrteilige Heizvorrichtungen an, die im Bedarfsfall geöffnet werden können. In der einfachsten Ausführung handelt es sich um zwei Heizkästen, die den oder die zu erwärmenden Gegenstände umschließen und aufgeklappt werden können, um den Innenraum zugänglich zu machen.

Bei den bekannten Heizvorrichtungen werden die Heizkästen lediglich auseinandergefahren, so daß das Bedienungspersonal in den Innenraum der Heizvorrichtung einereifen muß, um die evtl. steckengebliebenen Gegenstände herauszuholen. Da die Heizvorrichtung bei diesen Arbeiten meist nicht abgestellt wird bzw. noch heiß ist, kann sich die Bedienungsperson an den heißen Teilen Brandwunden zuziehen.

Ein weiterer Nachteil besteht in dem erheblichen Energieverlust, wenn die Heizvorrichtung geöffnet wird. Wenn die Heizvorrichtung nach den Reparaturen wieder geschlossen wird, dauert es einige Zeit, bis sich die gewünschte Prozeßtemperatur eingestellt hat.

Aufgabe der Erfindung ist daher eine Heizvorrichtung, die die Nachteile des Standes der Technik vermeidet und einen problemlosen Zugang zu den erwärmenden Gegenständen im Bedarfsfall gewährleistet, ohne daß Wärmeverluste auftreten.

Diese Aufgabe wird mit den Merkmalen des Patentanspruchs 1 gelöst.

Die Heizvorrichtung sieht vor, daß die Heizkästen derart verschwenkbar angeordnet sind, daß sie sich in Ruhestellung beabstandet zum Gegenstand ebenfalls in Schließstellung befinden. Dadurch, daß die Heizvorrichtung auch in Ruhestellung geschlossen ist, treten während der Arbeiten des Bedienungspersonals keinerlei Energieverluste auf. Außerdem befindet sich die Heizvorrichtung dann in einem vorgegebenen Abstand zu den Gegenständen, so daß das Bedienungspersonal mit der Heizvorrichtung bei diesen Arbeiten überhaupt nicht in Berührung kommt.

Vorzugsweise sind die Heizkästen übereinander angeordnet, wobei die offenen Seiten einander zugewandt sind. Jeder Heizkasten ist vorzugsweise an seinen beiden Stirnwänden über ein Parallelogrammgestänge mit einer ortsfesten Trägereinheit schwenkbar verbunden. Ein Parallelogrammgestänge bietet den Vorteil, daß bei einem Verschwenken der Heizkästen diese ihre relative Position zueinander beibehalten, so daß sie in Ruhestellung in eine Position gebracht werden können, die der der Arbeitsposition entspricht. Beide Heizkästen bewegen sich zwischen Ruhe- und Arbeitsstellung auf einem Kreisbogen, wobei der obere Kasten nach oben geschwenkt und der untere Heizkasten nach unten verschwenkt wird. Auf diese Weise können die Heizkästen von einer Schließstellung in eine andere Schließstellung überführt werden. Gleichzeitig entfernen sich die Heizkästen von dem zu erwärmenden Gegenstand.

Vorzugsweise weist das Trägerelement eine Antriebseinrichtung auf, die in den Gelenkpunkten des Parallelgestänges an der Trägereinheit angreift. In diesen Gelenkpuntkten sind vorzugsweise Zahnräder angeordnet, an denen ein Zahnriemen oder ein entsprechendes Antriebsmittel angreift, das mit einem Motor verbunden ist.

Beispielhafte Ausführungsformen der Erfindung werden nachfolgend anhand der Zeichnungen näher erläutert. Es zeigen:
- **Fig. 1**: einen Vertikalschnitt einer Heizvorrichtung,
- **Fig. 2a**: eine Draufsicht auf die Stirnfläche der in Fig. 1 gezeigten Heizvorrichtung in Arbeitsstellung
- **Fig. 2b**: die Heizvorrichtung der Fig. 2a in Ruhestellung und
- **Fig. 3**: eine Seitenansicht der Heizvorrichtung mit dazugehöriger Antriebseinrichtung zum Verschwenken der Heizkästen.

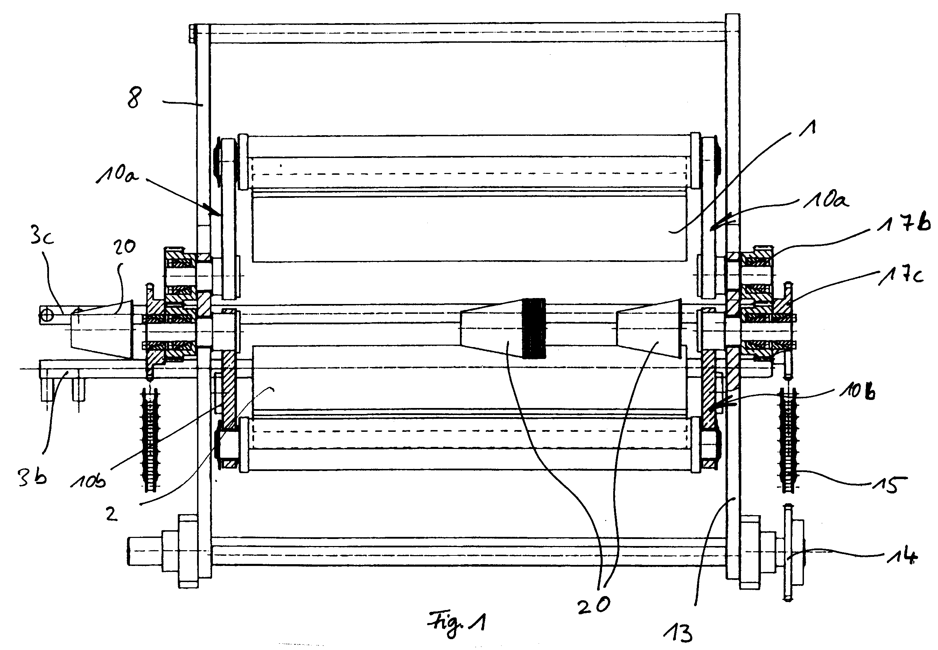

In der Fig. 1 ist eine Seitenansicht der Heizvorrichtung dargestellt, die in der hier gezeigten Ausführungsform aus zwei übereinander angeordneten Heizkästen 1 und 2 besteht. Es handelt sich um eine Heizvorrichtung, die einer Lippenrollvorrichtung vorgeschaltet ist. Auf den Führungsstangen 3a, b und c werden Kunststoffbecher durch die Heizvorrichtung geschoben. Die Heizkästen 1 und 2 sind so ausgebildet, daß sie die auf den Führungsstangen befindlichen Gegenstände in Arbeitsstellung weitgehend umschließen.

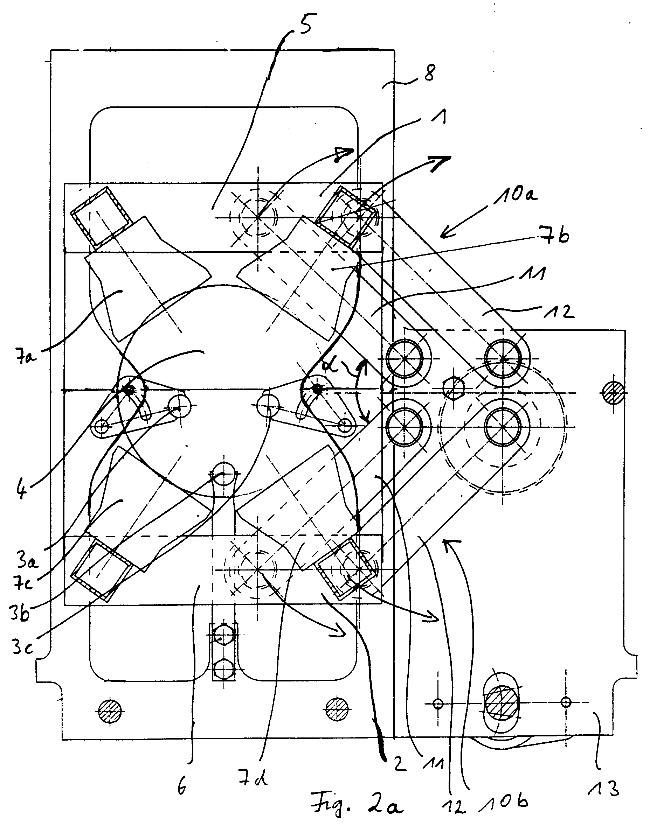

In der Fig. 2a ist die Draufsicht auf eine der Stirnseiten der in Fig. 1 gezeigten Heizkästen 1, 2 dargestellt. Die Heizkästen 1 und 2 weisen in ihren Stirnwänden 5 und 6 eine Öffnung 4 auf, durch die die Führungsstangen 3a, b, c hindurchgeführt sind.

Im Inneren der Heizkästen 1 und 2 sind Heizstrahler 7a bis d angeordnet, die auf die durch die Führungsstangen 3a, b, c gebildete Transportbahn gerichtet sind. An den Stirnwänden 5 und 6 ist außenseitig jeweils ein Parallelogrammgestänge 10a, b angelenkt. Jedes Parallelogrammgestänge besteht aus zwei gleichlangen Gelenkarmen 11, 12, die an einem Trägerelernent 13 schwenkbar angeordnet sind. In der in der Fig. 2a gezeigten Arbeitsstellung bilden die Gelenkarme der beiden Parallelogrammgestänge 10a, 10b einen spitzen Winkel α miteinander.

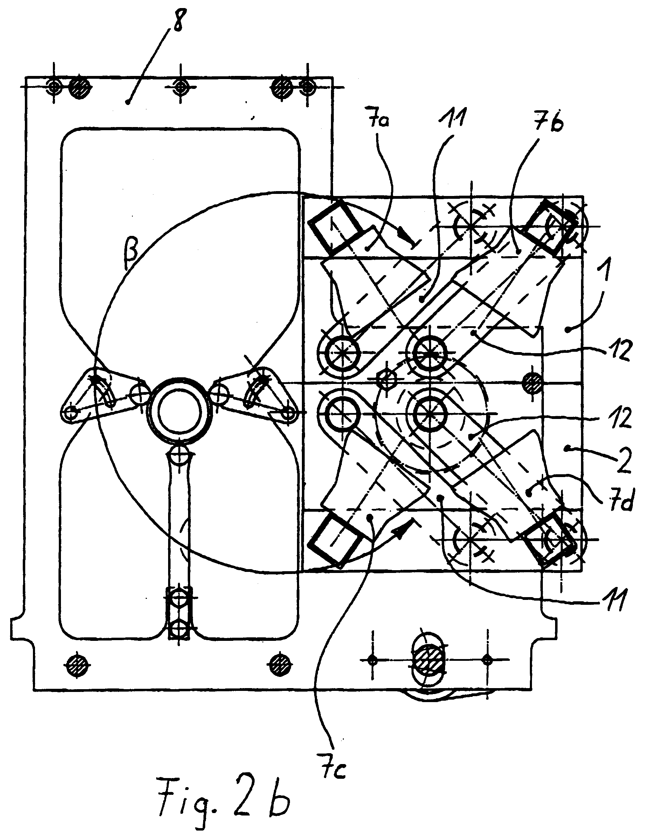

Zum Öffnen der Heizkästen 1,2 werden die Parallelogrammgestänge 10a, 10b in Pfeilrichtung verschwenkt. Hierbei bewegt sich der obere Heizkasten 1 auf einer kreisförmigen Bahn nach oben, während der untere Heizkasten 2 auf einer ebenfalls kreisförmigen Bahn nach unten verschwenkt wird. Am Ende der kreisförmigen Bahn bewegen sich die beiden Heizkästen 1 und 2 wieder zusammen und nehmen die in der Fig. 2b gezeigte Position ein. Der Winkel α hat sich bei dieser Bewegung kontinuierlich vergrößert, bis in der Endposition der Winkel β erreicht worden ist. Aufgrund des Parallelogrammgestänges 10a,b bleibt die relative Ausrichtung der beiden Heizkästen 1 und 2 zueinander erhalten, so daß in der Fig. 2b gezeigten Ruhestellung wiederum eine Schließstellung erreicht wird. Die in den Heizkammern 1 und 2 befindliche Wärme kann während der Arbeiten an den Führungsstangen 3a-c nicht entweichen.

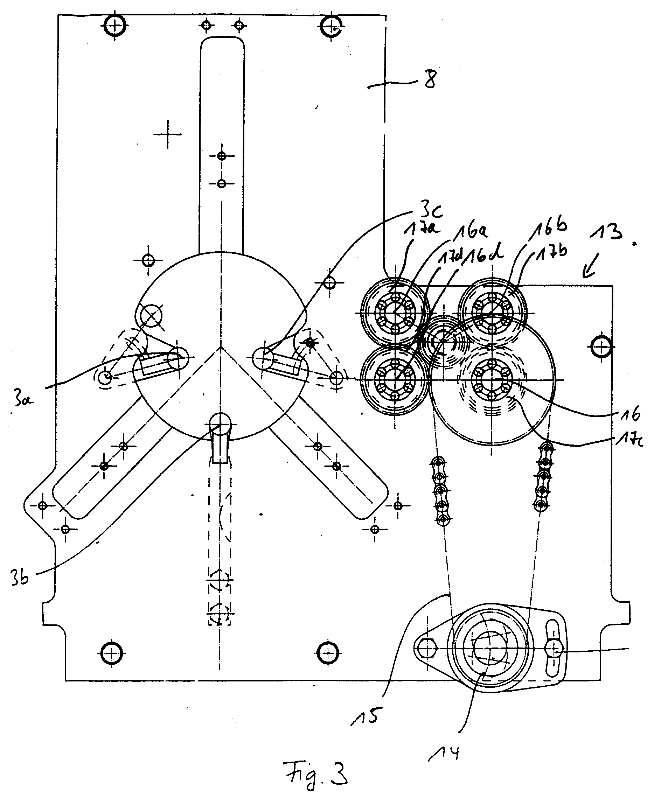

In der Fig. 3 ist die Seitenansicht der in Fig. 2a gezeigten Vorrichtung zusammen mit der Antriebseinrichtung dargestellt, wobei die Heizkästen vom Gehäuse 8 verdeckt sind. In den Anlenkpunkten 16a bis d der beiden Parallelogrammgestänge 10a,b, die in der Fig. 3 nicht zu sehen sind, sind Zahnräder 17a bis d angeordnet, die drehfest mit den jeweiligen Gelenkarmen 11 und 12 verbunden sind. Eines der Zahnräder 17b ist über die Antriebskette 15 mit dem Motor 14 verbunden (s. auch Fig. 1).

### Bezugszeichenliste

- 1: Heizkasten
- 2: Heizkasten
- 3a, b, c: Führungsstange
- 4: Öffnung
- 5: Stirnwand
- 6: Stirnwand
- 7a bis d: Heizstrahler
- 8: Gehäuse
- 10a, b: Parallelogrammgestänge
- 11: Gelenkarm
- 12: Gelenkarm
- 13: Trägerelement
- 14: Motor
- 15: Antriebskette
- 16a bis d: Anlenkpunkt
- 17a bis d: Zahnrad
- 20: Becher

## Patentansprüche

1. Heizvorrichtung mit mindestens zwei beweglich angeordneten Heizkästen, die mindestens einen zu erwärmenden Gegenstand in Arbeitsstellung (Schließstellung) weitgehend umschließen und die in eine Ruhestellung bewegbar sind, in der der Gegenstand zugänglich ist,
**dadurch gekennzeichnet,**
daß die Heizkästen (1,2) derart verschwenkbar angeordnet sind, daß sie sich in Ruhestellung beabstandet zum Gegenstand ebenfalls in Schließstellung befinden.

2. Heizvorrichtung nach Anspruch 1, **dadurch gekennzeichnet,** daß die Heizkästen (1,2) übereinander angeordnet sind, wobei die offenen Seiten einander zugewandt sind und daß jeder Heizkasten (1,2) an seinen beiden Stirnwänden (5,6) über ein Parallelogrammgestänge (10a,b) mit einem ortsfesten Trägerelement (13) schwenkbar verbunden ist.

3. Heizvorrichtung nach Anspruch 2, **dadurch gekennzeichnet,** daß das Trägerelement (13) eine Antriebseinrichtung (14) aufweist, die in den Gelenkpunkten (16a bis d) der Parallelogrammgestänge (10a,b) angreift.

4. Heizvorrichtung nach Anspruch 3, **dadurch gekennzeichnet,** daß in den Gelenkpunkten (16a bis d) Zahnräder (17a bis d) angeordnet sind.
